# EUROPÄISCHE PATENTSCHRIFT

(11) **EP 2 485 351 B1**
(45) Veröffentlichungstag und Bekanntmachung des Hinweises auf die Patenterteilung: **04.11.2020**
(21) Anmeldenummer: 11153463.2
(22) Anmeldetag: 05.02.2011
(51) Int. Cl.: H02G 3/06, H02G 3/04

(54) **Kabelführungsvorrichtung**
Cable guidance device
Dispositif de guidage de câble

(43) Veröffentlichungstag der Anmeldung: 08.08.2012
(73) Patentinhaber: Zurecon AG, 8003 Zürich (CH)
(72) Erfinder: Pfluger, Gerd, CH-4625, Oberbuchsiten (CH)
(74) Vertreter: Rutz & Partner

(56) Entgegenhaltungen:
- EP-A1- 1 494 328
- EP-A1- 1 833 133
- DE-A1- 1 490 205
- DE-B1- 1 790 019
- US-A1- 2009 084 910

## Beschreibung

Die Erfindung betrifft eine Kabelführungsvorrichtung, die es erlaubt, Kabel insbesondere innerhalb eines Gebäudes vorteilhaft zu installieren.

In Gewerbe- Industrie- und Verwaltungsgebäuden werden Kabel, insbesondere Kabel für Stark- und Schwachstromnetze in Kabelkanälen geführt, beispielsweise von einem Schaltfeld einer Zentrale zu verschiedenen Verbrauchern. Durch Kabelführungsvorrichtungen dieser Art, die beispielsweise aus [1], EP 1 594 204 B1, bekannt sind, werden die installierten Kabel, die keine genügende Eigenstabilität aufweisen, gelagert und gegen äussere Einwirkungen geschützt. Weiterhin dient die Kabelführungsvorrichtung der optischen Abdeckung der Kabel.

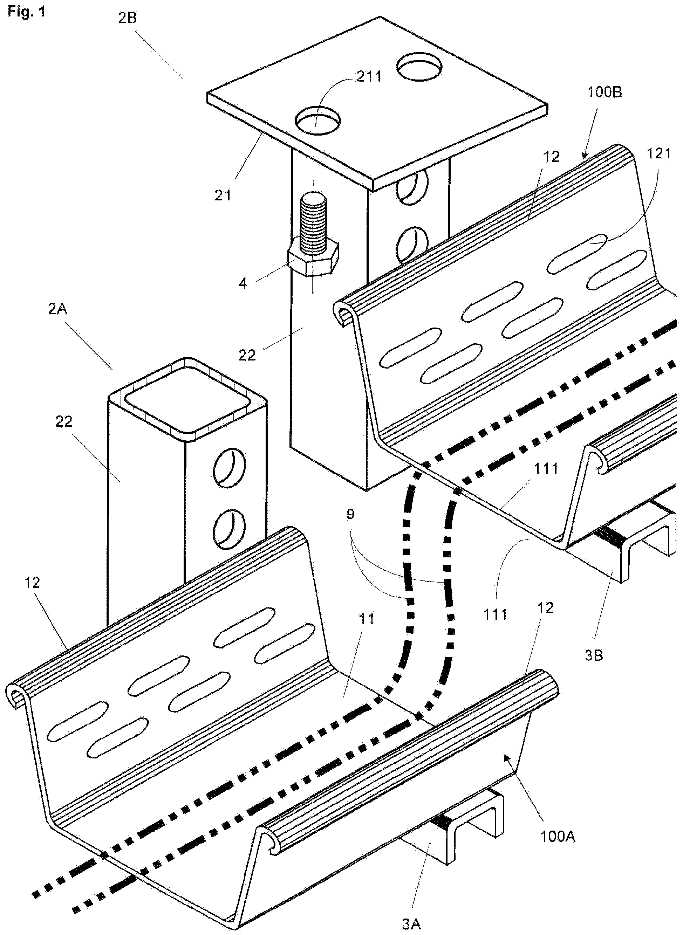

Wie dies in [1] beschrieben und nachstehend in Figur 1 gezeigt ist, umfasst das zur Montage an Decken vorgesehene Trägermaterial solcher Kabelführungsvorrichtungen normalerweise eine Deckenstütze 2A bzw. 2B, die einen waagrecht ausgerichteten Ausleger 3A bzw. 3B hält. Auf dem Ausleger 3A bzw. 3B ist eine Kabelbahn 100A bzw. 100B abgelegt, die der Aufnahme des Kabelmaterials 9 dient. Kabelbahnen 100A bzw. 100B dieser Art weisen normalerweise ein U-Profil mit einem Bodenelement 11 auf, an dessen Seiten je ein Seitenteil 12 vorgesehen ist.

Die normalerweise aus verzinktem oder rostfreiem Stahl bestehende Deckenstütze 2A bzw. 2B weist ein plattenförmiges Kopfstück 21 auf, das mit einem rohrförmigen Profilteil 22 verschweisst, verschraubt oder auf eine andere Art fest verbunden ist. Zur Installation der Deckenstütze 2A bzw. 2B werden Montageschrauben 4 durch im Kopfstück 21 vorgesehene Öffnungen 211 geführt und mit der Decke verschraubt. Anschliessend wird der Ausleger 3A bzw. 3B auf passender Höhe mit dem Profilteil 22 der Deckenstütze 2A bzw. 2B verschraubt oder darin eingehängt.

Wie dies in Figur 1 gezeigt ist, sind entlang eines Verkehrswegs oft Höhenunterschiede zu überbrücken. Dabei werden aufeinanderfolgende Kabelbahnen 100A bzw. 100B auf unterschiedlichen Höhen montiert, wodurch die in die Kabelbahnen 100A bzw. 100B eingelegten Kabel 9 oft ungeschützt vertikal vom einen Ende einer ersten Kabelbahn 100A zum korrespondierenden Ende einer zweiten Kabelbahn 1B verlaufen. Die Kabel 9 können in diesem Fall an einer Kante 111 des Bodenelements 11 der höher gelegenen Kabelbahn 1B anliegen und müssen daher entsprechend geschützt werden. Dies erfordert jedoch einen erhöhten Aufwand bei der Installation und insbesondere bei einem späteren Austausch der Kabel 9. Da der Übergang von der ersten zur zweiten Kabelbahn 100A, 100B jeweils an den einander zugewandten Endstücken erfolgt, sind die Kabelbahnen 100A, 100B daher stets mit den entsprechenden Längen vorzusehen, damit eine Höhenänderung an einer gewünschten Stelle realisiert werden kann. Dabei resultiert ein entsprechend hoher Planungsaufwand oder am Installationsort eine aufwendige Bearbeitung der Kabelbahnen, die mit einer bestimmten Länge angeliefert oder entsprechend angepasst werden müssen. Bei der Kürzung solcher Kabelbahnen treten sodann Materialverluste auf. Aus Figur 1 ist ferner ersichtlich, dass die installierten Kabel in der Übergangszone frei liegen und daher nicht geschützt sind und auch optisch störend in Erscheinung treten.

Zum Schutz und zur Führung der Kabel in der Übergangszone zwischen zwei Kabelbahnen ist in [2], EP 2 159 890 A1, die Verwendung von Kabelbahnsegmenten vorgeschlagen, die mit den Kabelbahnen verbindbar sind und in einem bestimmten Winkel ausgerichtet werden können, um einen bestimmten Installationsweg zu realisieren. Mit dieser bekannten Kabelführungsvorrichtung können Kabel daher in einer Bahn, die Kabelbahnen verbindbar sind und in einem bestimmten Winkel ausgerichtet werden können, um einen bestimmten Installationsweg zu realisieren. Mit dieser bekannten Kabelführungsvorrichtung können Kabel daher in einer Bahn, die aus mehreren Kabelbahnen und Kabelbahnsegmenten besteht, entlang einem beliebigen Verkehrsweg geführt werden. Auch in diesem Fall erfolgen Änderungen des Richtungsverlaufs der Kabel jeweils zwischen den Endstücken von je zwei Kabelbahnen. Damit die Richtungsänderungen an den gewünschten Stellen erfolgen, müssen wiederum Kabelbahnen mit entsprechender Länge vorgesehen werden. Ein geordneter Übergang an beliebigen Stellen zwischen zwei z.B. parallel zueinander geführten oder sich kreuzenden Kabelbahnen ist dabei nicht möglich. Die Überführung eines Kabels aus einer ersten in eine zweite Kabelbahn wird durch die oben beschriebenen Vorrichtungen nicht unterstützt.

Aus der US2009084910A1 ist eine Kabelrinne bekannt, die aus Tragelementen besteht, die gelenkig mit einander verbunden sind.

Aus der EP1833133A1 ist eine Montagevorrichtung für einen Kabelkanal bekannt, die ein an einem Gebäudeteil montierbares Halteteil aufweist, das eine gegenüber der Längsachse des Kabelkanals geneigte Schlitzöffnung aufweist, durch die hindurch Kabel in das Halteteil eingelegt werden kann. Der Kabelkanal kann in der Folge auf das Halteteil aufgesetzt werden, so dass er das Halteteil zumindest teilweise umschliesst.

Aus der DE1490205A1 ist eine Kabelrinne gemäß dem Oberbegriff des Anspruchs 1 bekannt, die aus einer Anzahl von Tragelementen mit im wesentlichen U-förmigem Querschnitt zusammensetzbar ist. Die Tragelemente bestehen aus entsprechend abgelängten Abschnitten vorgefertigter Bauteile, die eine über ihre Länge fortlaufende·Lochung aufweisen, die den Anschluss eines gelochten Verbindungsstückes gestattet, das zwei aufeinanderfolgende Tragelemente aneinanderstossend miteinander verbindet. Die Bodenelemente der Tragelemente können mit Öffnungen versehen werden, durch die hindurch einzelne der geführten Kabel von der Kabelrinne weggeführt werden können.

Aus der DE1790019B1 ist ein Kabelrinne bekannt, die aus einzeln miteinander verbundenen, vorgefertigten Tragelementen besteht, die aus einem grobmaschigen Drahtgewebe bestehen und mittels Verbindungsschellen miteinander verbindbar sind, die an benachbarten, parallel verlaufenden Drähten montiert werden. Auch die Bodenelemente dieser Tragelemente können mit Öffnungen versehen werden, durch die hindurch einzelne der geführten Kabel von der Kabelrinne weggeführt werden können.

Der vorliegenden Erfindung liegt daher die Aufgabe zugrunde, eine verbesserte Kabelführungsvorrichtung zu schaffen, die es erlaubt, Kabel geordnet von einer ersten zu einer zweiten Kabelbahn zu überführen.

Insbesondere ist eine an Wand und/oder Decke montierbare Kabelführungsvorrichtung zu schaffen, bei der Kabel an beliebigen Stellen und mit minimalem Aufwand von einer ersten zu einer zweiten Kabelbahn überführt werden können, die parallel zueinander verlaufen oder sich in einem beliebigen Winkel kreuzen.

Die Realisierung von Richtungsänderungen der Installationswege der Kabel soll dabei nicht nur bei der Erstinstallation, sondern auch nach längerer Betriebsdauer, beispielsweise bei einer Umnutzung oder Erweiterung des Gebäudes bzw. bei einer beliebigen Änderung der Infrastruktur, mit minimalem Aufwand möglich sein.

Ferner soll die Kabelführungsvorrichtung auch bei der Realisierung komplexer Leitungsnetze mit zahlreichen Querverbindungen stets einen optimalen ästhetischen Eindruck hinterlassen.

Diese Aufgabe wird mit einer Kabelführungsvorrichtung gelöst, welche die in Anspruch 1 angegebenen Merkmale aufweist. Vorteilhafte Ausgestaltungen der Erfindung sind in weiteren Ansprüchen angegeben.

Die Kabelführungsvorrichtung umfasst wenigstens eine erste und eine zweite Kabelbahn, die je zwei Seitenteile und wenigstens ein dazwischen liegendes Bodenelement aufweisen, sowie ein Kabelbahnsegment, mittels dessen installierte Kabel von der ersten zur zweiten Kabelbahn führbar sind.

Erfindungsgemäss weist das Kabelbahnsegment an einem Ende ein mit dem Bodenelement der ersten Kabelbahn verbundenes erstes Winkelelement und am anderen Ende ein zweites Winkelelement auf, welches durch eine Durchtrittsöffnung im Bodenelement der zweiten Kabelbahn hindurch geführt und mit dem Bodenelement der zweiten Kabelbahn verbunden ist.

Bei der erfindungsgemässen Kabelführungsvorrichtung können Kabel somit geordnet an beliebigen Stellen von der ersten zur zweiten Kabelbahn überführt werden. Das Kabelbahnsegment ist einfach aufgebaut und erlaubt es, die installierten Kabel insbesondere gegen mechanische und thermische Einwirkungen optimal zu schützen.

Winkelelemente können dabei verschiedenartig ausgestaltet und miteinander verbunden sein.

Gemäß der Erfindung sind die beiden Winkelelemente durch ein Bahnelement miteinander verbunden.

In einer zweiten vorzugsweisen Ausgestaltung überlappen sich die Winkelelemente, so dass sie an einer beliebigen Stelle miteinander verbindbar sind. Die beiden Winkelelemente werden dabei derart miteinander verbunden, dass der jeweilige Abstand zwischen den beiden Kabelbahnen überbrückt wird. Vorzugsweise bestehen die Winkelelemente aus Gitterstrukturen mit Längsstegen und Querstegen. Die Winkelelemente sind vorzugsweise identisch ausgestaltet, so dass nur einen Typ Winkelelement hergestellt werden muss.

Die Verwendung von Gitterstrukturen ist besonders vorteilhaft, da diese es erlauben, die Kabel geschützt und geordnet von der ersten zur zweiten Kabelbahn zu führen. Die Kabel können zum Beispiel mit Kabelbindern mit der Gitterstruktur verbunden werden und werden von dieser somit stabil gehalten. Die Gitterstrukturen können, in Abhängigkeit des Abstandes zwischen den Kabelbahnen, in der erforderlichen Länge und, in Abhängigkeit der Grösse der Durchtrittsöffnungen, in der erforderlichen Breite zugeschnitten werden. Sofern sich die Durchtrittsöffnungen in der zweiten Kabelbahn wahlweise öffnen lassen, resultiert eine flexible Infrastruktur, welche sich bei der Erstinstallation und bei späteren Nachinstallationen beliebig an die Forderungen des Anwenders anpassen lässt. Weiterhin resultiert ein vorteilhafter ästhetischer Eindruck, der insbesondere dann bedeutsam ist, wenn mehrere Übergänge an exponierten Stellen realisiert werden.

Vorzugsweise umfasst das Kabelbahnsegment wenigstens ein Bahnelement aus Blech, welches ein Bodenstück und zwei Seitenstücke aufweist, die ein Aufnahmeprofil bilden. Am ersten Ende des Bahnelements ist ein erstes Endstück des ersten Winkelelements, dessen zweites Endstück mit der Bodenplatte der ersten Kabelbahn verbunden ist, und am zweiten Ende des Bahnelements ist ein erstes Endstück des zweiten Winkelelements in das Aufnahmeprofil eingesetzt, dessen zweites Endstück mit dem Bodenelement der zweiten Kabelbahn verbunden ist. Durch das vorzugsweise mit einer Abdeckung versehene Bahnelement werden die installierten Kabel optimal geführt und gegen mechanische und thermische Einwirkungen geschützt. Zu diesem Zweck kann zwischen dem Bahnelement und der Abdeckung Isolationsmaterial oder ein Isolationskörper angeordnet werden.

Besonders vorteilhaft können erfindungsgemässe Kabelführungsvorrichtungen in öffentlich zugänglichen Räumen installiert werden, die einerseits einem relativ tiefen Kostenbudget und andererseits gehobenen ästhetischen Ansprüchen genügen sollen. Die erfindungsgemässen Kabelführungsvorrichtungen treten in diesen Räumen als Designmerkmale und nicht in ihrer Funktion als technische Nutzgegenstände in Erscheinung. Dabei werden die Kabelführungsvorrichtungen vorzugsweise aus Metallblech gefertigt, welches eine Beschichtung mit einer vom Anwender gewählten Farbe aufweisen kann.

Das Kabelbahnsegment kann an beliebigen Stellen innerhalb der ersten Kabelbahn aufgesetzt und durch das Bodenelement in der zweiten Kabelbahn hindurch geführt werden. Dabei sind auch Richtungswechsel vorteilhaft realisierbar. Unabhängig davon, ob die beiden Kabelbahnen parallel oder gekreuzt unmittelbar übereinander oder versetzt zueinander verlaufen, wird stets eine technisch und ästhetisch vorteilhafte Installation erzielt.

Besonders vorteilhaft ist, dass Kabelbahnsegmente nicht nur bei der Installation, sondern auch bei späteren Installationsänderungen, beispielsweise bei der Verlegung zusätzlicher Kabel, mit minimalem Aufwand installiert werden können. Auch nach der Realisierung von mehreren Nachinstallationen bleibt der angestrebte vorteilhafte ästhetische Eindruck gewahrt.

Zur Installation des Kabelbahnsegments muss lediglich eine Durchtrittsöffnung im Bodenelement der höher liegenden zweiten Kabelbahn vorgesehen oder freigelegt werden. In den Bodenelementen der Kabelbahnen können dabei Fenster permanent vorgesehen oder derart vorbereitet werden, dass sie mit geringem Aufwand geöffnet werden können. Beispielsweise werden Fenster soweit ausgeschnitten, dass sie, analog zu Scharnieren, nur noch über dünne Stege mit dem umgebenden Rand des Bodenelements verbunden sind. Vorzugsweise wird eine Fensterplatte soweit ausgeschnitten bzw. freigelegt, dass nur noch vier schmale Stege verbleiben, die mit einer Zange oder einem Seitenschneider auf einer Fensterseite oder auf beiden Fensterseiten mühelos durchtrennt werden können. Sofern mehrere Fenster gleichmässig über ein Bodenelement verteilt sind, kann an einer passenden Stelle eines der Fenster geöffnet und das zweite Winkelelement hindurch geführt werden.

In einer bevorzugten Ausgestaltung werden die Winkelelemente derart in das Bodenelement oder die Seitenelemente der Kabelbahnen integriert, dass deren Endstücke die Fenster bilden, welche wahlweise geöffnet und mit dem nach oben oder nach unten verlaufenden Bahnelement des Kabelbahnsegments verbunden werden können. Das ausgeschnittene Fenster bzw. Endstück wird vorzugsweise mit Gewindebohrungen und/oder Montageöffnungen versehen, welches erlauben, das Fenster bzw. Endstück mit dem Bahnelement des Kabelbahnsegments zu verbinden. Diese Montageelemente können zusammen mit den Winkelelementen mit minimalem Aufwand in die Kabelbahnen integriert werden.

In einer weiteren vorzugsweisen Ausgestaltung werden Kabelbahnen vorgesehen, bei denen wenigstens eine Durchtrittsöffnung ausgeschnitten und mit einem flächigen Metallsegment, z.B. einem dünnen Metallblech oder einer Metallfolie, abgedeckt ist, deren Materialdicke d₁₁₃ um wenigstens einen im Bereich von 2-10 liegenden Faktor x (x = d₁₁/d₁₁₃) geringer ist, als die Materialdicke d₁₁ des Bodenelements. Das Metallsegment kann somit leicht entfernt oder aufgeteilt werden, um die Durchtrittsöffnung freizulegen. Beispielsweise wird das Metallsegment mit wenigstens einer geschwächten Zone versehen, entlang der das Metallsegment mit reduziertem Kraftaufwand in zwei Teile aufgeteilt werden kann. Dazu wird die geschwächte Zone z.B. mit Öffnungen, wie längs der Trennlinie verlaufenden Längsschlitzen oder einem Trennkanal mit weiter reduzierter Materialdicke versehen.

In einer weiteren vorzugsweisen Ausgestaltung wird das Metallsegment mit Montageöffnungen versehen, die nach der Auftrennung des Metallsegments in die beiden Teile mit Kopplungselementen, wie Haken, koppelbar sind, die am Bodenelement vorgesehen und gegebenenfalls daraus freigelegt sind. Beispielsweise wird ein Haken aus dem Bodenelement ausgeschnitten und nach unten gebogen.

Zum Schutz und zur optischen Abdeckung der im Kabelbahnsegment geführten Kabel wird vorzugsweise ein Abdeckelement vorgesehen, welches auf das Bahnelement aufgesetzt wird. Die Kabel werden somit beidseitig umfasst und geschützt. Das Bahnelement und das Abdeckelement sind vorzugsweise identisch ausgestaltet und greifen mit den Seitenstücken ineinander ein. Beispielsweise sind die Seitenstücke elastisch ausgestaltet und je mit einem achsparallel verlaufenden Kanal versehen. Auf diese Weise können die Seitenstücke des Bahnelements und des Abdeckelements, die gegeneinander geöffnet sind, so weit gegeneinander geführt werden, bis die Kanäle der zueinander korrespondierenden Seitenstücke ineinander liegen. Auf diese Weise wird das Abdeckelement formschlüssig gehalten und kann nur mit einem entsprechenden Kraftaufwand wieder gelöst werden. Auf dieselbe Weise ist es gemäß der Erfindung nach Anspruch 1 möglich, Bahnelemente Rücken an Rücken ineinander zu setzen und anschliessend teleskopartig gegeneinander zu verschieben, bis eine gewünschte Länge erreicht ist. Auf diese Weise gelingt es, beliebige Abstände zwischen zwei Kabelbahnen mit zwei identischen Bahnelementen zu überbrücken. Dadurch entfällt der Aufwand, ein Bahnelement mit der erforderlichen Länge zuzuschneiden. Das erste Bahnelement ist dabei mit dem ersten Winkelelement und das zweite Bahnelement ist mit dem zweiten Winkelelement verbunden. Auf dieselbe Weise können zwei Abdeckelemente ineinander versetzt und verschoben werden, bis die erforderliche Länge erreicht ist.

Mit dem Einschliessen der Kabel zwischen dem Bahnelement und dem Abdeckelement werden einerseits ein mechanischer Schutz und andererseits ein Sichtschutz realisiert. Durch vorzugsweise feuerfeste Isolationskörper kann der Schutz der Kabel ferner auf die Abwehr thermischer Einwirkungen erweitert werden, welche die Funktion und den Zustand der Kabel störend beeinflussen könnten. Die Kabel können daher von der ersten Kabelbahn durch eine Zone, die thermischen Einflüssen oder Witterungseinflüssen ausgesetzt ist, gut geschützt zur zweiten Kabelbahn geführt werden.

Die Fertigung des Kabelbahnsegments kann besonders einfach und vorteilhaft erfolgen.

Die Winkelelemente weisen eine ein- oder zweiteilige Grundplatte auf, die an den beiden über ein Mittelstück miteinander verbundenen Endstücken je zwei Flügelelemente aufweist, die eine in das Aufnahmeprofil einschiebbare, vorzugsweise einpressbare Manschette bilden. Durch die Manschetten wird das Kabel in Position gehalten und gegen Zugseinwirkung geschützt.

Vorzugsweise ist zwischen den beiden Flügelelementen jedes Endstücks ein dem Einführen der Kabel dienender Aufnahmeschlitz vorgesehen, der quer, vorzugsweise in einem Winkel von 30°-60°, zur Laufrichtung der installierten Kabel verläuft. Das Kabel kann daher nach einer Drehung in die betreffende Manschette bzw. das betreffende Endstück eingeführt werden. Aufgrund der üblichen Zugkraft wird das Kabel wieder gestreckt und kann nicht mehr selbsttätig aus der Manschette austreten.

Die Endstücke der Winkelelemente werden anhand von Befestigungsmitteln mit der zugehörigen Kabelbahn oder mit dem Bahnelement verbunden. Dabei können die Endstücke neben den Manschetten mit Flanschelementen versehen sein, welche Montageöffnungen aufweisen. Zur Vermeidung zusätzlicher Flanschelemente wird im Aufnahmeschlitz jedoch eine beispielsweise kreisförmige Erweiterung vorgesehen, welche es erlaubt, Befestigungsmittel in die Endstücke bzw. Manschetten einzuführen und zu betätigen.

Die Befestigungsmittel umfassen vorzugsweise einen Nutenstein, der in eine Öffnung in der entsprechenden Kabelbahn oder im Bahnelement einführbar und mit einer Schraube arretierbar ist. Auf diese Weise kann das Kabelbahnsegment mit wenigen Handgriffen installiert werden.

Vorzugsweise sind die beiden Winkelelemente identisch ausgestaltet und deren Mittelstücke derart gebogen, dass die Endstücke flächig an der zugehörigen Kabelbahn und am Bahnelement anliegen. Die Verlegung weiterer Kabel in den Kabelbahnen wird durch das installierte Kabelbahnsegment daher in keiner Weise behindert.

Die als Manschetten ausgebildeten Endstücke sind vorzugsweise identisch und können dadurch mit geringem Aufwand gefertigt werden. Das gesamte Winkelelement kann dabei einstückig aus einem Blech geformt werden. Dabei werden an den Endstücken vorgesehene Flügelelemente derart gebogen, dass die oben beschriebenen Manschetten gebildet werden. Das die Endstücke verbindende Mittelstück wird dabei derart gebogen, dass bei einer Neigung des Kabelbahnsegments von 45° die Endstücke des ersten Winkelelements einen Winkel von etwa 135° und die Endstücke des zweiten Winkelelements einen Winkel von etwa 225° einschliessen.

Alternativ können die Endstücke auch separat gefertigt und mit einem Mittelstück versehen werden. In der Folge werden die Mittelstücke der einzelnen gefertigten Endstücke übereinander gelegt und durch Befestigungsmittel, wie Nieten, Schrauben oder Tox-Verbindungen miteinander verbunden. Beim Toxen, das auch als Durchsetzfügen bezeichnet wird, erfolgt das ineinander Formen oder Clinchen der Blechteile im Regelfall ohne Fügehilfselement mit einer Matrize und mit einem festen Gesenk. Die Verbindung der beiden Endstücke eines Winkelelements erfolgt daher mit minimalem Aufwand.

Die Winkelelemente und/oder das wenigstens eine Bahnelement sowie das Abdeckelement, die vorzugsweise aus Metallblech oder Kunststoff gefertigt sind, können dabei auch erst am Installationsort mit wenigen Handgriffen zusammengesetzt werden, weshalb die gebündelten und gestapelten Einzelteile mit minimalem Raumbedarf gelagert und transportiert werden können.

Nachfolgend wird die Erfindung anhand von Zeichnungen beispielsweise näher erläutert. Dabei zeigt:
- Fig. 1: die eingangs beschriebene Kabelführungsvorrichtung mit zwei auf unterschiedlicher Höhe montierten Kabelbahnen 100A, 100B;
- Fig. 2: ein nicht erfindungsgemässes Kabelbahnsegment 5, das der Führung von Kabel von einer ersten zu einer zweiten Kabelbahn 1A, 1B dient und das ein Bahnelement (52) aufweist, in das an einem Ende ein erstes Winkelelement (51) und in das am zweiten Ende ein zweites Winkelelement (53) eingesetzt wird;
- Fig. 3: eine nicht erfindungsgemässe Kabelführungsvorrichtung mit den beiden Kabelbahnen 1A, und 1B, die übereinander parallel geführt sind, und mit dem installierten Kabelbahnsegment 5 von Figur 2, über das Kabel 9 geordnet und geschützt von der ersten zur zweiten Kabelbahn 1A, 1B geführt sind;
- Fig. 4: eine Schnittdarstellung der Kabelführungsvorrichtung von Figur 3;
- Fig. 5: eine Kabelbahn 1 mit zwei im Bodenelement 11 vorgesehenen Durchtrittsöffnungen 110, von denen eine mittels Metallschichten 113 und die andere durch ein in das Bodenelement integriertes Winkelelement 51, 53 abgedeckt ist, dessen Endstücke 511, 531 bzw. 531, 533 einseitig lösbar sind und nach unten oder nach oben gekippt, gegebenenfalls seitlich gedreht, werden können;
- Fig. 6a: eine in einem Bodenelement 11 vorgesehene Durchtrittsöffnung 110, die mit einem dünnen Metallblech 113 abgedeckt ist welche mittels Nieten 7 mit dem Bodenelement 11 verbunden ist;
- Fig. 6b: das Metallblech 113 von Figur 6a nach der Auftrennung in zwei Teile 113A, 113B, die unter das Bodenelement 11 gebogen und in Haken 113 eingehängt sind, die aus dem Bodenelement 11 ausgeschnitten und nach unten gebogen wurden;
- Fig. 7a-c: verschiedene Darstellungen des erfindungsgemässen Bahnelements 52 und des Abdeckelements 54;
- Fig. 8a: ein nicht erfindungsgemässes Kabelbahnsegment 5 in der Ausgestaltung einer Gitterstruktur mit Längsstegen 5001 und damit verbundenen Querstegen 5002, die zwei über ein Zwischenstück 5131 miteinander verbundene Winkelelemente 51, 53 aufweist;
- Fig. 8b: ein nicht erfindungsgemässes Kabelbahnsegment 5, das ein Bahnelement 52 aufweist, in das die Gitterstruktur 5000 von Figur 8a eingesetzt ist;
- Fig. 9a: zwei miteinander verbindbare Winkelelemente 51, 53 in der Ausgestaltung von Gitterstrukturen; und
- Fig. 9b: zwei verschiedene erfindungsgemässe Ausgestaltungen eines Kabelbahnsegments 5, welche anhand der beiden Winkelelemente 51, 53 gebildet wurden.

Figur 1 zeigt die eingangs beschriebene Kabelführungsvorrichtung mit zwei mittels Deckenstützen 2A, 2B und Auslegern 3A, 3B auf unterschiedlichen Höhen installierten Kabelbahnen 1A, 1B.

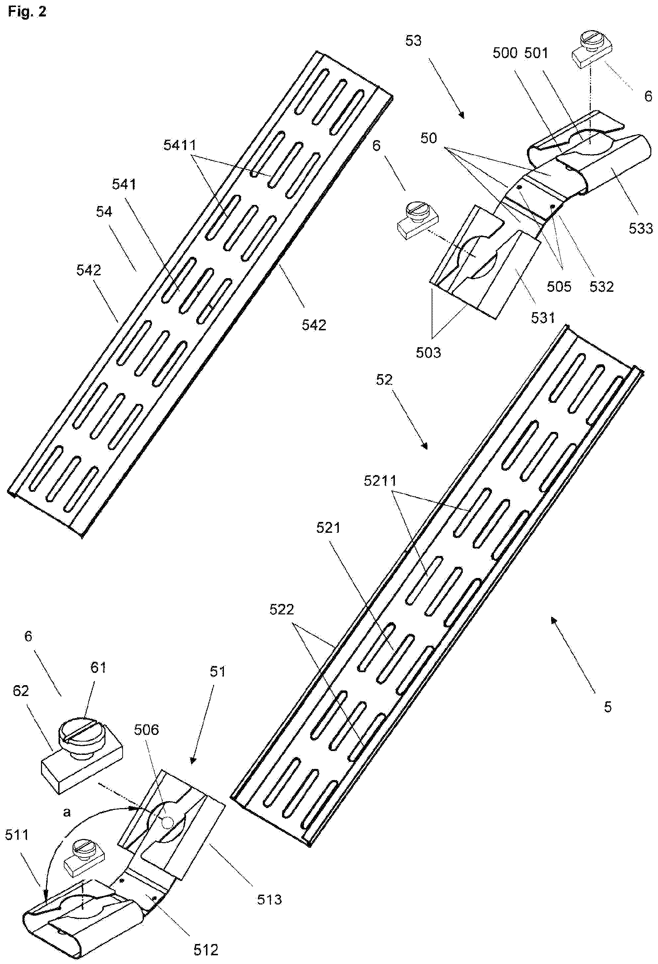

Figur 2 zeigt ein Kabelbahnsegment 5, welches ein Bahnelement 52 und ein dazu passendes Abdeckelement 54 sowie ein erstes und ein zweites Winkelelement 51, 53 umfasst. Die Winkelelemente 51, 53, die in vorzugsweisen Ausgestaltungen einstückig in die Kabelbahnen 1A, 1B integriert sein können, umfassen zwei Endstücke 511, 513 bzw. 531, 533, die über ein Mittelstück 512 bzw. 522 miteinander verbunden sind. Die Endstücke 511, 513 bzw. 531, 533 weisen Flügelelemente 503 auf, die derart zu Manschetten geformt sind, dass ein quer verlaufender Aufnahmeschlitz 500 frei gehalten wird, durch den hindurch Kabel 9 in das Endstück 511, 513 bzw. 531, 533 beziehungsweise die Manschette eingelegt werden können. In der Mitte des Aufnahmeschlitzes 500 ist eine kreisförmige Erweiterung 501 vorgesehen, welches erlaubt, Befestigungsmittel 6 sowie dazu passendes Werkzeug in die Manschette beziehungsweise das Endstück 511, 513 bzw. 531, 533 einzuführen. Mittels der Befestigungsmittel 6, beispielsweise einem Nutenstein 62 und einer Schraube 61, sind die Endstücke 511, 513 bzw. 531, 533 mit dem Bahnelement 52 oder dem Bodenelement 11 der ersten und zweiten Kabelbahn 1A, 1B verbindbar. Der Nutenstein 62 wird durch eine Öffnung 111, 5211 im Bodenelement 11 oder dem Bahnelement 52 hindurch geführt, gedreht und anschliessend mit der Schraube 61 fest gezogen.

Die Winkelelemente 51, 53 können aus einem einzigen Metallblech 50 gefertigt werden, welches eine entsprechende Abwicklung mit den Flügelelementen 503 im Bereich der Endstücke 511, 513 bzw. 531, 533 aufweist. In der Folge wird die aus einem Blechstück ausgeschnittene Abwicklung 50 zu den gezeigten Winkelelementen 51, 53 geformt.

Alternativ kann auch eine Abwicklung für nur ein Endstück 511, 513, 531, 533 vorgesehen werden, welche zwei Flügelelemente 503 und ein Mittelstück 512 bzw. 532 aufweist. In der Folge werden die Mittelstücke 512 bzw. 532 von zwei Endstücken 511 und 513 bzw. 531 und 533 übereinander gelegt und durch Befestigungsmittel 505, wie Nieten oder Tox-Verbindungen, miteinander verbunden. Bei dieser alternativen Fertigungsart kann die Abwicklung mit einem einfachen Werkzeug hergestellt und bearbeitet werden.

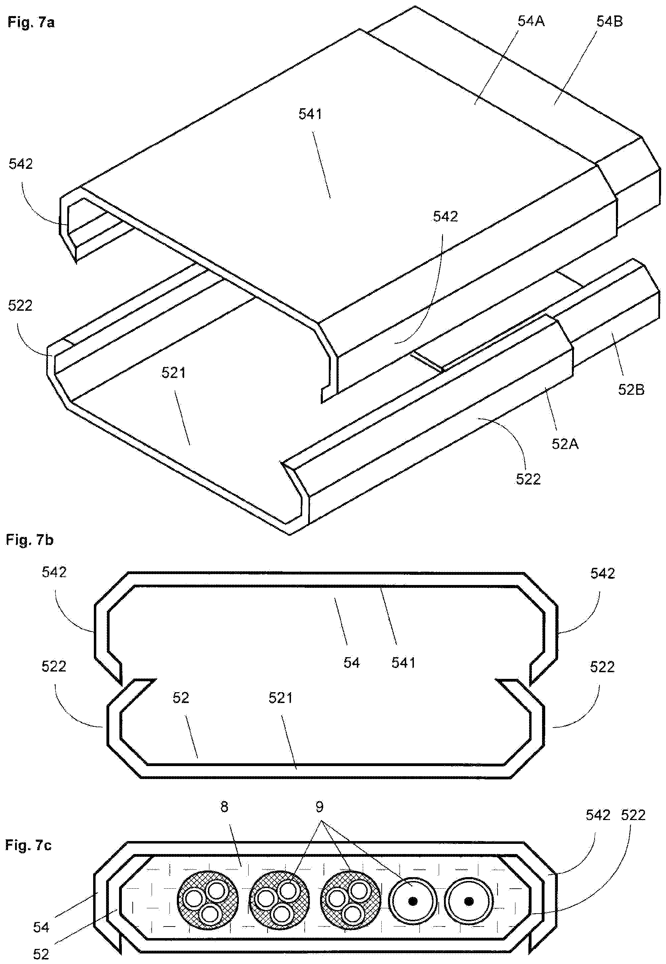

Das Bahnelement 52 und das darauf aufgesetzte Abdeckelement 54 sind in den Figuren 7a, 7b und 7c in prinzipiellen Ausgestaltungen gezeigt.

Das vorzugsweise mit Lochungen 5211 (siehe Figur 2) versehene Bahnelement 52 weist ein Mittelstück 521 und zwei Seitenstücke 522 auf, die zumindest annähernd ein U-Profil bilden. Die Seitenstücke 522 sind rundlich geformt und nach innen geneigt, so dass sie zusammen mit dem Bodenstück 521 die Form einer Klammer bilden. Das vorzugsweise mit Lochungen 5211 (siehe Figur 2) versehene Abdeckelement 54, das identisch zum Bahnelement 52 ausgestaltet ist, weist ebenfalls ein Mittelstück 541 sowie zwei Seitenstücke 542 auf. Aufgrund der elastischen Ausgestaltung und der Ausbildung des Bahnelements 52 und des Abdeckelements 54 als Klammer ist es möglich, das Bahnelement 52 und die Abdeckung 54 ineinander zu verschieben, so dass ein in sich geschlossenes Profil mit einem darin integrierten Kabelkanal resultiert. In Figur 7c ist gezeigt, dass das Bahnelement 52 und das darauf aufgesetzten Abdeckelement 54 einen Kabelkanal bilden, in dem mehrere Kabel 9 sowie eine Isolationsschicht, Isolationsmaterial oder Isolationskörper 8, eingeschlossen sind. Die installierten Kabel 9 sind bei der Traverse von der ersten zur zweiten Kabelbahn 1 daher optimal geschützt.

Da das Bahnelement 52 und das damit verbundene Abdeckelement 54 nur eine geringe Last aufnehmen müssen, können sie vorteilhaft aus dünnem flexiblem Metallblech gefertigt und dadurch mit geringem Kraftaufwand manuell miteinander verbunden und auch wieder gelöst werden. Obwohl die Kabel 9 stabil gehalten werden, ist es leicht möglich, das Abdeckelement 54 zu entfernen und eine Änderung der Installation vorzunehmen.

Wie dies in Figur 7a gezeigt ist, können je zwei Bahnelemente 52A, 52B und je zwei Abdeckelemente 54A, 54B auch Rücken an Rücken bzw. Mittelstück an Mittelstück 521 bzw. 541 ineinander eingesetzt und anschliessend axial gegeneinander verschoben werden, um ein kombiniertes Bahnelement 52A, 52B beziehungsweise ein kombiniertes Abdeckelement 54A, 54B zu realisieren, welches eine Länge aufweist, die dem zu überbrückenden Abstand zwischen der ersten und der zweiten Kabelbahn 1A, 1B entspricht.

Das Bahnelement 52 bildet somit ein Aufnahmeprofil, welches jedoch nicht nur das Abdeckelement 54, sondern vor allem auch die Endstücke 513, 531 der in Figur 2 gezeigten Winkelelemente 51, 53 aufnehmen kann. Die Abmessungen der als Manschetten ausgebildeten Endstücke 513, 531 sind dabei derart gewählt, dass die Endstücke 513, 531 in das Aufnahmeprofil des Bahnelements 52 eingeschoben oder eingepresst werden können. Die Einzelteile des Kabelbahnsegments können daher gestapelt und gebündelt angeliefert und am Installationsort mit wenigen Handgriffen zusammengesetzt werden.

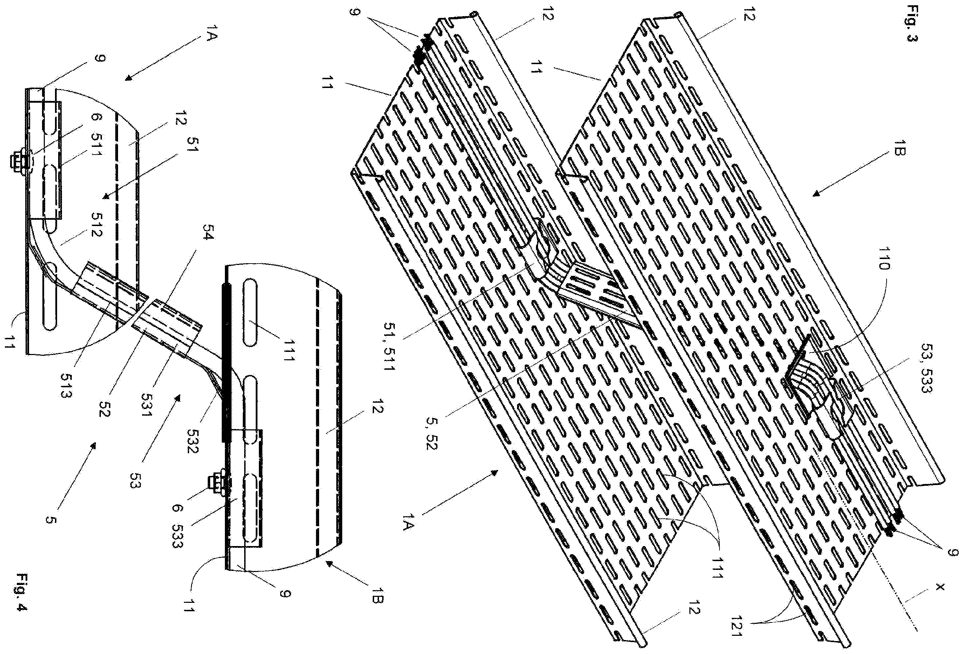

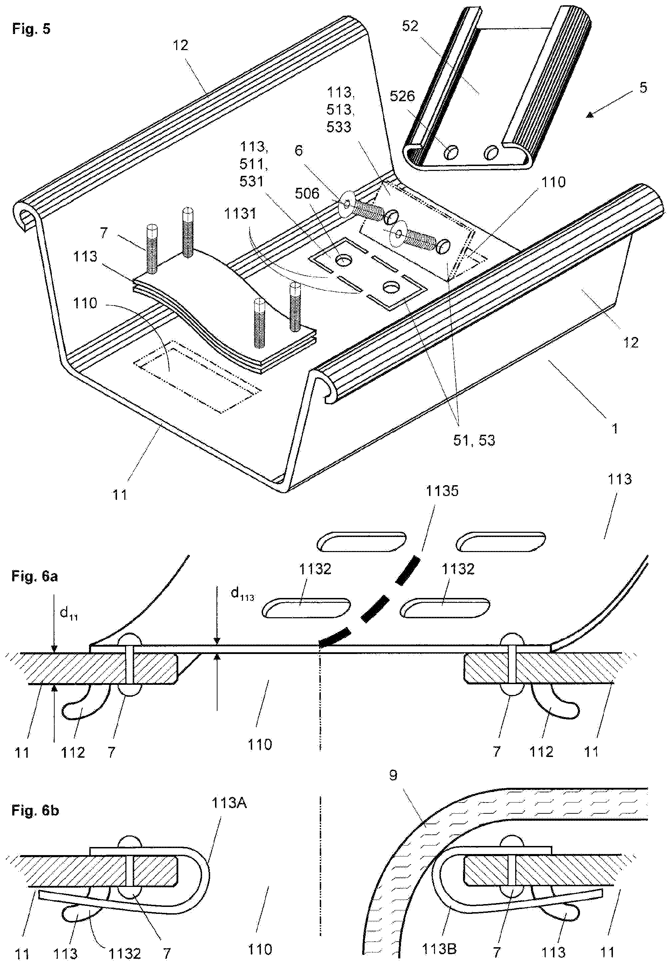

Figur 3 zeigt eine erste und eine zweite aus gelochtem Blech hergestellte Kabelbahn 1A, 1B, die über ein Kabelbahnsegment 5 miteinander verbunden sind. Das Kabelbahnsegment 5, über das vier Kabel 9 von der ersten zur zweiten Kabelbahn 1A, 1B geführt sind, ist mit dem ersten Endstück 511 des ersten Winkelelements 51 mit dem Bodenelement 11 der ersten Kabelbahn 1A und mit dem zweiten Endstück 533 des zweiten Winkelelement 53 mit dem Bodenelement 11 der zweiten Kabelbahn 1B verbunden. Das erste Winkelelement 51 ist dabei mit dem Bodenelement 11 der ersten Kabelbahn 1A verbunden, z.B. verschraubt. Das zweite Winkelelement 53 ist hingegen durch eine Durchtrittsöffnung 110 im Bodenelement 11 der zweiten Kabelbahn 1B hindurch geführt, welche permanent vorgesehen ist oder für diesen Zweck geöffnet wurde. Es ist gezeigt, dass das Kabelbahnsegment 5 nur wenig Raum in Anspruch nimmt und die Kabel wohl geordnet von der ersten zur zweiten Kabelbahn 1A, 1B überführt und in den dazwischen liegenden Raum optimal schützt. Bei der Integration der Winkelelemente 51, 53 in die Kabelbahnen 1A, 1B ist ein noch kompakterer Aufbau realisierbar, wie dies in Figur 5 gezeigt ist.

Figur 4 zeigt eine Schnittdarstellung der Kabelführungsvorrichtung von Figur 3. Es ist ersichtlich, dass das erste Endstück 511 des ersten Winkelelements 51 und das zweite Endstück 533 flach am Bodenelement 11 der ersten bzw. zweiten Kabelbahn 1A, 1B anliegen und mit Befestigungsmitteln 6 damit verbunden sind. Das zweite Endstück 513 des ersten Winkelelements 51 und das erste Endstück 531 des zweiten Winkelelements 53 liegen flach am Bahnelement 52 an, welches gegenüber den Bodenelementen 11 der ersten und zweiten Kabelbahn 1A, 1B um etwa 60° geneigt ist. Damit dies realisiert werden konnte, sind die Mittelstücke 512 und 532 der beiden Winkelelemente 51, 53 entsprechend biegbar. Der Abstand zwischen den Kabelbahnen 1A und 1B sowie die gegenseitige Ausrichtung kann beliebig gewählt werden. Vorzugsweise wird jedoch vorgesehen, dass das zweite Endstück 533 des durch die Durchtrittsöffnung 110 hindurch geführten zweiten Winkelelements 53 stets parallel zur Längsachse der zweiten Kabelbahn 1B ausgerichtet ist.

Wie dies in den Figuren 3 und 4 gezeigt ist, muss lediglich eine Durchtrittsöffnung 110 im Bodenelement 11 der höher liegenden zweiten Kabelbahn 1B freigelegt werden. Im Bodenelement 11 der Kabelbahn 1B werden vorzugsweise Fenster vorgesehen, die mit geringem Aufwand geöffnet werden können. Bei der Integration der Winkelelemente 51, 53 in das Bodenelement 11 resultiert die Durchtrittsöffnung 110 durch das Lösen und Kippen eines Endstücks 511, 513 bzw. 531, 533.

In Figur 5 ist eine Kabelbahn 1 mit zwei Durchtrittsöffnungen 110 gezeigt, von denen eine durch wenigstens ein flächiges Metallsegment 113 abgedeckt wird. Das Metallsegment 113, das beispielsweise mit Nieten 7 mit dem Bodenelement 11 verbunden wird, weist eine Materialdicke d₁₁₃ auf, die um wenigstens einen im Bereich von 2-10 liegenden Faktor x geringer ist als die Materialdicke d₁₁ des Bodenelements 11. Zur Freilegung einer Durchtrittsöffnung 110 wird das betreffende Metallsegment 113 aufgetrennt oder beseitigt, was aufgrund der geringen Materialdicke d₁₁₃ des Metallsegments 113 mit geringem Kraftaufwand anhand eines Werkzeugs leicht möglich ist. Das Metallsegment 113 kann aufgetrennt oder vollständig beseitigt werden. Dabei wird vorzugsweise vorgesehen, dass die Ränder der Durchtrittsöffnung 110 abgerundet sind, so dass Kabel 9 auch ungeschützt eingeführt werden können. Alternativ kann ein Schutzelement aufgesetzt oder fest vorgesehen werden, welches nach der Beseitigung des Metallsegments 113 den Rand der Durchtrittsöffnung 110 überlappt.

Die weitere Durchtrittsöffnung 110 im Bodenelement 11 der Kabelbahn 1 wurde durch Anheben eines Endstücks 513, 533 eines Winkelelements 51, 53 freigelegt, welches in das Bodenelement 11 integriert ist. Die Integration der Winkelelemente 51, 53 in das Bodenelement 11 und/oder in die Seitenelemente 12 der Kabelbahn 1 ist praktisch ohne Mehraufwand realisierbar, weshalb erfindungsgemässe Vorrichtungen in dieser Ausgestaltung besonders vorteilhaft sind. Die Winkelelemente 51, 53 können in beliebiger Anzahl und an beliebigen Positionen vorgesehen werden.

Zur Montage des Kabelbahnsegments 5 wird eines der Endstücke 511 bzw. 531 oder 513 bzw. 533 der Winkelelemente 51, 53 zumindest einseitig vom Bodenelement 11 gelöst, so dass es nach unten oder nach oben gekippt und mit dem Bahnelement 52 des Kabelbahnsegments 5 verbunden werden kann. Das Bahnelement 52 ist vorzugsweise mit gerollten oder gerundeten Seitenstücken 522 versehen, welche das betreffende Endstück 511 bzw. 531 oder 513 bzw. 533 umfassen, so dass installiertes Kabel 9 geschützt am Bahnelement 52 und nicht am Endstück 511 bzw. 531 oder 513 bzw. 533 anliegt. Die Endstücke 511 bzw. 531 oder 513 bzw. 533 sind ferner mit Bohrungen, vorzugsweise Gewindebohrungen, versehen, in die Montageelemente, wie Schrauben, einführbar sind. Die Montage eines Bahnelements 52 kann daher mit wenigen Handgriffen vollzogen werden.

In Figur 5 ist gezeigt, dass die Endstücke 511 bzw. 531 oder 513 bzw. 533, die einen Teil des Bodenelements 11 bilden, je durch vier Stege 1131 mit dem Rest des Bodenelements 11 verbunden. Durch Lösen der entsprechenden Stege 1131 kann das betreffende Endstück 511 bzw. 531 oder 513 bzw. 533 auf einer Seite freigelegt und in einem gewünschten Winkel nach unten oder nach oben gekippt, gegebenenfalls gedreht, werden.

In Figur 6a ist ein Metallsegment 113 gezeigt, welches eine Durchtrittsöffnung 110 überdeckt und mit einer geschwächten Zone 1135 versehen ist, entlang der das Metallsegment 113 mit reduziertem Kraftaufwand in zwei Teile 113A, 113B aufgeteilt werden kann. Die geschwächte Zone 1135 ist z.B. mit Öffnungen, z.B. längs der Trennlinie verlaufenden Längsschlitzen, oder mit einer kanalartigen Vertiefung bzw. einem Trennkanal versehen, in dessen Bereich eine reduzierte Materialdicke von z.B. 0,2 mm bis 0.5 mm vorliegt. Das Metallsegment 113 kann daher mit geringem Aufwand aufgetrennt werden. Ferner weist das Metallsegment 113 mehrere Montageöffnungen 1132 auf. Sofern das Materialsegment 113 aufgetrennt und nicht vollständig beseitigt wird, wird vorzugsweise vorgesehen, dass die resultierenden Teile derart gebogen werden können, dass eine Rundung oder Wölbung resultiert, die der schonenden Lagerung des Kabels 9 dient.

Figur 6b zeigt das Metallsegment 113 nach der Auftrennung in die beiden Teile 113A, 113B, die nach unten unter die Unterseite des Bodenelements 11 gebogen sind. Die beiden Teile 113A, 113B sind unterhalb des Bodenelements 11 je von hakenförmigen Kopplungselementen 113 gehalten, die z.B. am Bodenelement 11 freigelegt und je in eine Montageöffnung 1132 eingeführt wurden. Die beiden Teile 113A, 113B bilden im Randbereich der Durchtrittsöffnung 110 somit elastische Wölbungen auf denen das Kabel 9 schonend gelagert wird.

In den Figuren 7a, 7b und 7c sind verschiedene Darstellungen des Bahnelements 52 und des Abdeckelements 54 gezeigt, welche oben beschrieben sind.

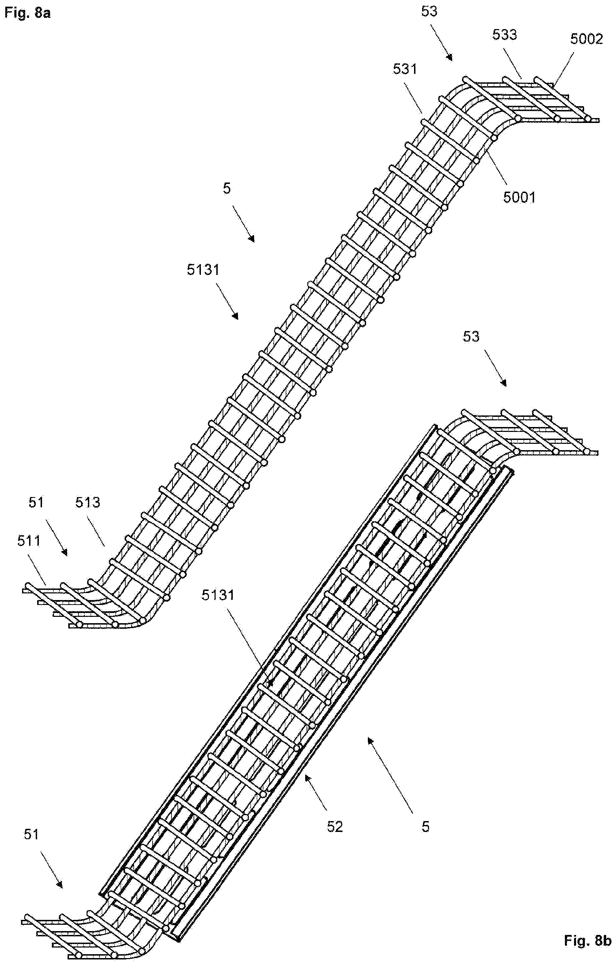

Figur 8a zeigt ein Kabelbahnsegment 5 in der Ausgestaltung einer Gitterstruktur mit Längsstegen 5001 und damit verbundenen Querstegen 5002, die zwei Winkelelemente 51, 53 aufweist, deren Endstücke 513 und 531 miteinander verbunden sind und ein Zwischenstück 5131 bilden. Die Gitterstruktur kann wahlweise dimensioniert und in der oben beschriebenen Weise mit den Kabelbahnen 1A, 1B verbunden werden. Dabei ist es möglich, das Kabelbahnsegment 5 mit geringem Aufwand an beliebige Abstände der Kabelbahnen 1A, 1B anzupassen. Die Gitterstruktur kann vor Ort einfach bearbeitet, d.h. zugeschnitten und gebogen werden. Ferner erlaubt die Gitterstruktur eine geordnete Installation der Kabel, die mittels Kabelbindern befestigt werden können.

Figur 8b das Kabelbahnsegment 5 von Figur 8a, das mit einem Bahnelement 52 gemäss Figur 2 ergänzt wurde. Durch das Bahnelement 52 werden installierte Kabel optimal gegen äussere Einwirkungen geschützt. Ferner resultiert ein optimaler ästhetischer Eindruck, was insbesondere bei Installationen in Geschäftsräumen von Bedeutung ist.

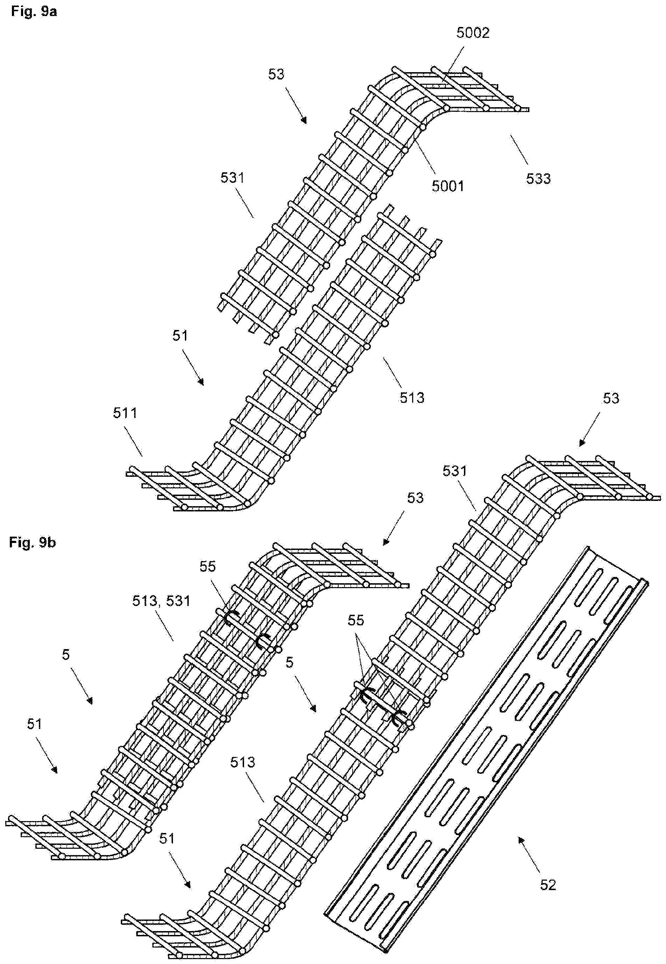

Um das Zuschneiden und bearbeiten von Gitterstrukturen zu vermeiden werden vorzugsweise Winkelelemente 51, 53 eingesetzt, wie sie in Figur 9a gezeigt sind. Die beiden Winkelelemente 51, 53 können zu Kabelbahnsegmenten 5 mit gewünschter Länge zusammengefügt werden. Aufgrund der Ausgestaltung als Gitterstrukturen können die Winkelelemente 51, 53 mit einfachen Mitteln, wie Kabelbindern, Montageringen, oder beispielsweise schraubbaren Klemmen an beliebigen Positionen miteinander verbunden werden, so dass sich das Kabelbahnsegment 5 teleskopisch einstellen lässt. Auch in diesem Fall wird gemäß der Erfindung wiederum ein Bahnelement 52 vorgesehen. Bei der erfindungsgemässen Ausführung werden zwei Bahnelement 52 ineinander gefügt und so weit gegeneinander verschoben, bis die Länge des kombinierten Bahnelements 52 an die Länge der Gitterstruktur angepasst ist.

## Patentansprüche

1. Kabelführungsvorrichtung mit wenigstens einer ersten und einer zweiten Kabelbahn (1A, 1B), die je zwei Seitenteile (12) und wenigstens ein dazwischen liegendes Bodenelement (11) aufweisen, wobei das Bodenelement (11) der zweiten Kabelbahn (1B) mit einer Durchtrittsöffnung (110) versehen ist, durch die hindurch installierte Kabel (9) von der ersten zur zweiten Kabelbahn (1A; 1B) führbar sind, wobei ein der Führung der Kabel (9) von der ersten zur zweiten Kabelbahn (1A; 1B) dienendes Kabelbahnsegment (5) vorgesehen ist, das an einem Ende ein mit dem Bodenelement (11) der ersten Kabelbahn (1A) verbundenes erstes Winkelelement (51) und am anderen Ende ein zweites Winkelelement (53) aufweist, **dadurch gekennzeichnet, dass** das zweite Winkelelement durch die Durchtrittsöffnung (110) im Bodenelement (11) der zweiten Kabelbahn (1B) hindurch geführt und mit dem Bodenelement (11) der zweiten Kabelbahn (1B) verbunden ist,
dass das Kabelbahnsegment (5) wenigstens ein erstes und ein zweites Bahnelement (52A, 52B) umfasst, welche je ein Bodenstück (521) und zwei Seitenstücke (522) aufweisen, die ein Aufnahmeprofil bilden,
dass die Bahnelemente (52A, 52B) Rücken an Rücken ineinander gesetzt teleskopartig gegeneinander verschiebbar sind,
dass am ersten Ende des ersten Bahnelements (52A) ein erstes Endstück (513) des ersten Winkelelements (51) eingesetzt ist, dessen zweites Endstück (511) mit der Bodenplatte (11) der ersten Kabelbahn (1A) verbunden ist, und
dass am zweiten Ende des zweiten Bahnelements (52B) ein erstes Endstück (531) des zweiten Winkelelements (53) eingesetzt ist, dessen zweites Endstück (533) mit dem Bodenelement (11) der zweiten Kabelbahn (1B) verbunden ist.

2. Kabelführungsvorrichtung nach Anspruch 1, **dadurch gekennzeichnet, dass** die Winkelelemente (51, 53) aus wenigstens einer Gitterstruktur oder wenigstens einer ein- oder mehrteiligen Grundplatte (50) gefertigt sind, die an den beiden Endstücken (511, 513 bzw. 531, 533), die über ein Mittelstück (512; 532) miteinander verbunden sind, und vorzugsweise je zwei Flügelelemente (503) aufweisen, die zu einer Manschette geformt sind, die in das Aufnahmeprofil des zugehörigen Bahnelements (52A, 52B) einschiebbar, vorzugsweise einpressbar sind.

3. Kabelführungsvorrichtung nach Anspruch 2, **dadurch gekennzeichnet, dass** die Enden der beiden Flügelelemente (503) jedes Endstücks (511, 513 bzw. 531, 533) einen dem Einführen der Kabel (9) dienenden Aufnahmeschlitz (500) begrenzen, der quer, vorzugsweise in einem Winkel von 30°-60°, zur Laufrichtung der installierten Kabel (9) verläuft.

4. Kabelführungsvorrichtung nach Anspruch 3, **dadurch gekennzeichnet, dass** der Aufnahmeschlitz (500) eine vorzugsweise kreisförmige Erweiterung (501) aufweist, welche es erlaubt, Befestigungsmittel (6) in die Endstücke (511, 513 bzw. 531, 533) einzuführen, mittels derer diese mit der zugehörigen Kabelbahn (1A; 1B) bzw. mit dem zugehörigen Bahnelement (52A, 52B) verbindbar bzw. verbunden sind.

5. Kabelführungsvorrichtung nach Anspruch 4, **dadurch gekennzeichnet, dass** die Befestigungsmittel (6) einen Nutenstein (62) umfassen, der in eine Öffnung (111; 5211) in der entsprechenden Kabelbahn (1A; 1B) oder in das zugehörige Bahnelement (52A, 52B) einführbar und mit einer Schraube (61) arretierbar ist.

6. Kabelführungsvorrichtung einem der Ansprüche 1 - 5, **dadurch gekennzeichnet, dass** die beiden aus Kunststoff oder aus Metall gefertigten Winkelelemente (51; 53) identisch ausgestaltet und derart gebogen sind, dass die Endstücke (511, 513; 531, 533) flächig an der zugehörigen Kabelbahn (1A; 1B), ggf. am zugehörigen Bahnelement (52A, 52B) anliegen.

7. Kabelführungsvorrichtung nach einem der Ansprüche 1 - 6, **dadurch gekennzeichnet, dass** das erste Endstück (513) des ersten Winkelelements (51) und das erste Endstück (531) des zweiten Winkelelements (53) einstückig oder durch Befestigungsmittel (55) miteinander verbunden sind.

8. Kabelführungsvorrichtung nach Anspruch 7, **dadurch gekennzeichnet, dass** die miteinander verbundenen Winkelelemente (51, 53) aus einer Gitterstruktur bestehen, die Längsstege (5001) und Querstege (5002) aufweist.

9. Kabelführungsvorrichtung nach einem der Ansprüche 1 - 8, **dadurch gekennzeichnet, dass** auf die beiden ineinander verschiebbaren Bahnelemente (52A, 52B) ein Abdeckelement (54) oder zwei ineinander verschiebbare Abdeckelemente (54) aufgesetzt sind, die identisch oder komplementär zu den Bahnelementen (52A, 52B) ausgestaltet sind.

10. Kabelführungsvorrichtung nach Anspruch 9, **dadurch gekennzeichnet, dass** die Bahnelemente (52A, 52B) und/oder dass das wenigstens eine Abdeckelement (54) aus Metall oder Kunststoff gefertigt sind.

11. Kabelführungsvorrichtung nach einem der Ansprüche 1 - 10, **dadurch gekennzeichnet, dass** die Durchtrittsöffnung (110) im Bodenelement (11) der zweiten Kabelbahn (1B) mit wenigstens einem flächigen Metallsegment (113) überdeckt ist, dessen Materialdicke d₁₁₃ um wenigstens einen im Bereich von 2-10 liegenden Faktor x (x = d₁₁/d₁₁₃) geringer ist als die Materialdicke d₁₁ des Bodenelements (11).

12. Kabelführungsvorrichtung nach Anspruch 11, **dadurch gekennzeichnet, dass** das wenigstens eine Metallsegment (113) mit wenigstens einer geschwächten Zone (1135) versehen ist, entlang der das Metallsegment (113) mit reduziertem Kraftaufwand in zwei Teile (113A, 113B) aufteilbar ist, wobei die geschwächte Zone (1135) vorzugsweise mit Öffnungen, insbesondere längs der Trennlinie verlaufenden Längsschlitzen oder einem Trennkanal versehen ist, der eine reduzierte Materialdicke aufweist.

13. Kabelführungsvorrichtung nach Anspruch 11 oder 12, **dadurch gekennzeichnet, dass** das Metallsegment (113) mit Montageöffnungen (1131) versehen ist, die nach der Auftrennung des Metallsegments (113) mit Kopplungselementen (112), wie Haken, koppelbar sind, die am Bodenelement (11) vorgesehen und gegebenenfalls daraus freigelegt sind.

14. Kabelführungsvorrichtung nach einem der Ansprüche 9-13, **dadurch gekennzeichnet, dass** zwischen den Bauelementen (52A, 52B) und der Abdeckung (54) Isolationsmaterial (8) vorgesehen ist, in welches die Kabel (9) eingebettet werden können.

## Claims

1. Cable guiding device with at least one first and one second cable tray (1A, 1B), each of which has two side members (12) and at least one bottom element (11) lying therebetween, wherein the bottom element (11) of the second cable tray (1B) is provided with a passage opening (110), through which installed cable (9) is guidable from the first to the second cable tray (1A; 1B), wherein
a cable tray segment (5) is provided for guiding the cables (9) from the first cable tray (1A; 1B) to the second cable tray (1B), the cable tray segment (5) having at one end a first angular element (51) connected to the bottom member (11) of the first cable tray (1A) and at the other end a second angular element (53), **characterised in**
**that** the second angular element (53) is guided through the passage opening (110) in the bottom element (11) of the second cable tray (1B) and is connected to the bottom element (11) of the second cable tray (1B),
in that the cable tray segment (5) comprises at least one first and one second tray element (52A, 52B) which each have a base piece (521) and two side pieces (522) which form a receiving profile,
**that** the tray elements (52A, 52B) can be moved telescopically against each other back to back,
**that** at the first end of the first tray element (52A) a first end piece (513) of the first angle element (51) is inserted, whose second end piece (511) is connected to the base plate (11) of the first cable tray (1A), and that at the second end of the second tray element (52B) a first end piece (531) of the second angle element (53) is inserted, whose second end piece (533) is connected to the base element (11) of the second cable tray (1B).

2. Cable guiding device according to claim 1, **characterised in that** the angular elements (51, 53) are manufactured from at least one grid structure or at least one one-part or multi-part base plate (50), which at the two end pieces (511, 513 or 531, 533), which are connected to one another via a centre piece (512; 532), and preferably each have two wing elements (503), which are formed into a sleeve, which are insertable, preferably pressable, into the receiving profile of the associated tray element (52A, 52B).

3. Cable guiding device according to claim 2, **characterised in that** the ends of the two wing elements (503) of each end piece (511, 513 or 531, 533) delimit a receiving slot (500) serving for the insertion of the cables (9), which extends transversely, preferably at an angle of 30°-60°, to the running direction of the installed cables (9).

4. Cable guiding device according to claim 3, **characterised in that** the receiving slot (500) has a preferably circular widening (501), which allows fastening means (6) to be introduced into the end pieces (511, 513 or 531, 533), by means of which these are connected or connectable to the associated cable tray (1A; 1B) or to the associated tray element (52A, 52B).

5. Cable guiding device according to claim 4, **characterised in that** the fastening means (6) comprise a slot nut (62) which can be inserted into an opening (111; 5211) in the corresponding cable tray (1A; 1B) or in the associated tray element (52A, 52B) and can be locked with a screw (61) .

6. Cable guiding device according to one of the claims 1 - 5, **characterised in that** the two angular elements (51; 53) made of plastic or metal are designed identically and are bent in such a way that the end pieces (511, 513; 531, 533) lie flat against the associated cable tray (1A; 1B), possibly against the associated tray element (52A, 52B) .

7. Cable guiding device according to one of the claims 1 - 6, **characterised in that** the first end piece (513) of the first angular element (51) and the first end piece (531) of the second angular element (53) are connected together in one piece or by fastening means (55).

8. Cable guiding device according to claim 7, **characterised in that** the interconnected angular elements (51, 53) consist of a grid structure having longitudinal webs (5001) and transverse webs (5002).

9. Cable guiding device according to one of the claims 1 - 8, **characterised in that** on the two tray elements (52A, 52B) which are displaceable one inside the other a cover element (54) or two cover elements (54) which are displaceable one inside the other and which are identical or complementary to the tray elements (52A, 52B) are placed.

10. Cable guiding device according to claim 9, **characterised in that** the tray elements (52A, 52B) and/or the at least one cover element (54) are made of metal or plastic.

11. Cable guiding device according to one of the claims 1 - 10, **characterised in that** the passage opening (110) in the base element (11) of the second cable track (1B) is covered with at least one flat metal segment (113), the material thickness d113 of which is less than the material thickness d11 of the bottom element (11) by at least a factor x (x = d₁₁/d₁₁₃) lying in the range of 2-10.

12. Cable guiding device according to claim 11, **characterised in that** the at least one metal segment (113) is provided with at least one weakened zone (1135) along which the metal segment (113) can be divided into two parts (113A, 113B) with reduced force, wherein the weakened zone (1135) is preferably provided with openings, in particular longitudinal slots extending along the dividing line, or a dividing channel which has a reduced material thickness.

13. Cable guiding device according to claim 11 or 12, **characterised in that** the metal segment (113) is provided with mounting openings (1131) which, after the metal segment (113) has been cut up, can be coupled with coupling elements (112), such as hooks, which are provided on the base element (11) and, if necessary, exposed therefrom.

14. Cable guiding device according to one of the claims 9-13, **characterised in that** insulating material (8) is provided between the components (52A, 52B) and the cover (54), in which the cables (9) can be embedded.

## Revendications

1. Dispositif de guidage de câble avec au moins un premier et un deuxième chemin de câbles (1A, 1B), qui présentent chacun deux parties latérales (12) et au moins un élément de base (11) situé entre elles, l'élément de base (11) du deuxième chemin de câbles (1B) étant pourvu d'une ouverture de passage (110) par laquelle les câbles (9) installés peuvent être guidés du premier au deuxième chemin de câbles (1A; 1B),
dans lequel un segment de chemin de câbles (5) est prévu pour guider les câbles (9) du premier chemin de câbles (1A; 1B) au second chemin de câbles (1A; 1B), le segment de chemin de câbles (5) ayant à une extrémité un premier élément angulaire (51) relié à l'élément de base (11) du premier chemin de câbles (1A) et à l'autre extrémité un second élément angulaire (53), **caractérisé en ce**
**que** le deuxième élément angulaire (53) est guidé à travers l'ouverture de passage (110) dans l'élément de base (11) du deuxième chemin de câbles (1B) et est relié à l'élément de base (11) du deuxième chemin de câbles (1B),
**que** le segment de chemin de câbles (5) comprend au moins un premier et un deuxième élément de chemin de câbles (52A, 52B), dont chacun comporte une pièce de base (521) et deux pièces latérales (522) qui forment un profil de réception,
**que** les éléments de chemin de câbles (52A, 52B), placés dos à dos les uns dans les autres, peuvent être déplacés de manière télescopique les uns par rapport aux autres, qu'une première pièce d'extrémité (513) du premier élément angulaire (51) est insérée à la première extrémité du premier élément de chemin de câbles (52A), dont la deuxième pièce d'extrémité (511) est reliée à l'élément de base (11) de la première chemin de câble (1A), et
**qu'**une première pièce d'extrémité (531) du second élément angulaire (53) est inséré à la seconde extrémité du second élément de chemin de câbles (52B), dont la seconde pièce d'extrémité (533) est relié à l'élément de base (11) de la seconde chemin de câble (1B).

2. Dispositif de guidage de câble selon la revendication 1, **caractérisé en ce que** les éléments angulaires (51, 53) sont constitués d'au moins une structure de grille ou d'au moins une plaque de base (50) en une ou plusieurs pièces, qui aux deux pièces d'extrémité (511, 513 ou 531, 533), qui sont reliés entre eux par une pièce centrale (512; 532), et qui présentent de préférence chacun deux éléments d'aile (503) qui sont formés en un manchon, lequel peut être inséré, de préférence pressé, dans le profil de réception de l'élément de chemin de câbles (52A, 52B) associé.

3. Dispositif de guidage de câble selon la revendication 2, **caractérisé en ce que** les extrémités des deux éléments d'aile (503) de chaque pièce d'extrémité (511, 513 ou 531, 533) délimitent une fente de réception (500) pour l'insertion des câbles (9), laquelle fente s'étend transversalement, de préférence à un angle de 30°-60°, à la direction de déplacement des câbles (9) installés.

4. Dispositif de guidage de câble selon la revendication 3, **caractérisé en ce que** la fente de réception (500) présente un élargissement (501) de préférence circulaire, qui permet d'introduire dans les pièces d'extrémité (511, 513 ou 531, 533) des moyens de fixation (6) au moyen desquels celles-ci peuvent être reliées ou est reliées à la chemin de câble (1A; 1B) associée ou à l'élément de chemin de câbles (52A, 52B) associé.

5. Dispositif de guidage de câble selon la revendication 4, **caractérisé en ce que** les moyens de fixation (6) comprennent un écrou de la fente T (62) qui peut être inséré dans une ouverture (111; 5211) du chemin de câble (1A; 1B) associée ou dans l'élément de chemin de câble (1A; 1B) associée et peut être verrouillé avec une vis (61) .

6. Dispositif de guidage de câble selon l'une des revendications 1 - 5, **caractérisé en ce que** les deux éléments angulaires (51; 53) en matière plastique ou en métal sont conçus de manière identique et pliés de telle sorte que les pièces d'extrémité (511, 513; 531, 533) reposent à plat contre le chemin de câble associé (1A; 1B), éventuellement contre l'élément de chemin de câble (52A, 52B) associé.

7. Dispositif de guidage de câble selon une des revendications 1 - 6, **caractérisé en ce que** la première pièce d'extrémité (513) du premier élément angulaire (51) et la première pièce d'extrémité (531) du deuxième élément angulaire (53) sont reliées entre elles d'une seule pièce ou par des moyens de fixation (55).

8. Dispositif de guidage de câble selon la revendication 7, **caractérisé en ce que** les éléments angulaires interconnectés (51, 53) sont constitués d'une structure de grille ayant des âmes longitudinales (5001) et des âmes transversales (5002).

9. Dispositif de guidage de câble selon une des revendications 1 - 8, **caractérisé en ce qu'**un élément de couverture (54) ou deux éléments de couverture (54) qui peuvent être déplacés l'un dans l'autre et qui sont identiques ou complémentaires aux éléments de chemin de câbles (52A, 52B) sont montés sur les deux éléments de chemin de câbles (52A, 52B) qui peuvent être déplacés l'un dans l'autre.

10. Dispositif de guidage de câble selon la revendication 9, **caractérisé en ce que** les éléments chemin de câbles (52A, 52B) et/ou le au moins un élément de couverture (54) sont fabriqués en métal ou en plastique.

11. Dispositif de guidage de câble selon une des revendications 1 - 10, **caractérisé en ce que** l'ouverture de passage (110) dans l'élément de base (11) du deuxième chemin de câble (1B) est couverte d'au moins un segment métallique (113), dont l'épaisseur de matériau d113 est inférieure à l'épaisseur de matériau d11 de l'élément de base (11) d'au moins un facteur x (x = d₁₁/d₁₁₃) situé dans la région de 2-10.

12. Dispositif de guidage de câble selon la revendication 11, **caractérisé en ce que** le au moins un segment métallique (113) est pourvu d'au moins une zone affaiblie (1135) le long de laquelle le segment métallique (113) peut être divisé en deux parties (113A, 113B) avec une force réduite, la zone affaiblie (1135) étant de préférence pourvue d'ouvertures, en particulier de fentes longitudinales s'étendant le long de la ligne de séparation, ou d'un canal de séparation qui présente une épaisseur de matériau réduite.

13. Dispositif de guidage de câble selon la revendication 11 ou 12, **caractérisé en ce que** le segment métallique (113) est pourvu d'ouvertures de montage (1131) qui, après séparation du segment métallique (113), peuvent être couplées à des éléments de couplage (112), tels que des crochets, qui sont prévus sur l'élément de base (11) et, le cas échéant, sont exposés à partir de celui-ci.

14. Dispositif de guidage de câble selon une des revendications 9-13, **caractérisé en ce qu'**un matériau isolant (8) est prévu entre les composantes (52A, 52B) et le couvercle (54), dans lequel les câbles (9) peuvent être intégré.
